(19)

Europäisches
Patentamt
European
Patent Office
Office européen
des brevets

(11)　EP 3 098 199 B1

(12)　**EUROPEAN PATENT SPECIFICATION**

(45) Date of publication and mention
of the grant of the patent:
**15.11.2017　Bulletin 2017/46**

(51) Int Cl.:
***C01B 32/949*** *(2017.01)*

(21) Application number: **16171603.0**

(22) Date of filing: **26.05.2016**

(54) **PROCESS FOR THE DIRECT PRODUCTION OF TUNGSTEN CARBIDE POWDERS OF VARIOUS GRAIN SIZES STARTING FROM SCHEELITE**

VERFAHREN ZUR DIREKTSYNTHESE VON WOLFRAMCARBIDPULVERN MIT VERSCHIEDENEN TEILCHENGRÖSSEN AUS SCHEELIT

PROCÉDÉ DE SYNTHÈSE DIRECTE DE POUDRES DE CARBURE DE TUNGSTÈNE DE TAILLES DE PARTICLES VARIÉES À PARTIR DE SCHEELITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2015　IT UB20151362**

(43) Date of publication of application:
**30.11.2016　Bulletin 2016/48**

(73) Proprietor: **Fabbrica Italiana Leghe Metalliche Sinterizzate (F.I.L.M.S.) S.p.A.
28877 Anzola d'Ossola (VB) (IT)**

(72) Inventors:
• **POLINI, Riccardo
00173 Roma (IT)**
• **PALMIERI, Elena
00173 Roma (IT)**
• **MARCHESELLI, Giancarlo
28877 Anzola d'Ossola (VB) (IT)**

(74) Representative: **Banchetti, Marina et al
Barzanò & Zanardo Roma S.p.A.
Via Piemonte 26
00187 Roma (IT)**

(56) References cited:
• **POLINI R ET AL: "Nanostructured tungsten carbide synthesis by carbothermic reduction of scheelite: A comprehensive study",** INTERNATIONAL JOURNAL OF REFRACTORY METALS AND HARD MATERIALS (AVAILABLE ONLINE 01 MAY 2015), **vol. 51, 1 May 2015 (2015-05-01), pages 289-300, XP002753140, ISSN: 0263-4368**
• **BUTUKHANOV V L ET AL: "Carbothermic reduction of calcium tungstate in the presence of various oxides",** THEORETICAL FOUNDATIONS OF CHEMICAL ENGINEERING (PLEIADES PUBLISHING LTD), **vol. 42, no. 5, October 2008 (2008-10), pages 699-702, XP002753141, DOI: 10.1134/S0040579508050370**
• **SMITH E N: "Tungsten carbide. Crystals by the ton",** INTERNATIONAL JOURNAL OF REFRACTORY METALS AND HARD MATERIALS 1989 DEC, **vol. 8, no. 4, December 1989 (1989-12), pages 204-206, XP008178654,**

**EP 3 098 199 B1**

**Description**

**Field of the invention**

The present invention relates to a process for the direct synthesis of tungsten carbide powders of various grain sizes from carbothermic reduction of tungsten enriched ores. More particularly, the invention concerns a process allowing to obtain tungsten carbide powders directly from tungsten ores belonging to the class of scheelite by carbothermic reduction carried out in non-drastic conditions with regard to times and/or temperatures, and in which the obtained powders may have different particle sizes as said treatment conditions are changed.

**Background of the invention**

As is known, tungsten carbide, WC, represents the basic material for the production of cemented carbides (also called hard metals). Cemented carbides are obtained by powder metallurgy, in particular by sintering with liquid phase of the WC, in the presence of a metallic binder and possibly other carbides (e.g., TiC, TaC). The sintered products are largely used in tools, dies, molds, and various components with outstanding wear resistance and toughness. The economic importance of cemented tungsten carbide is witnessed by the fact that about 60% of the whole world annual production of tungsten is directed to the production of WC powders. As much as 45-50% of these powders are in the form of submicron tungsten carbide (S. Norgen et al, Int. J. Refract. Met. Hard Mater., 2015, 48, 31-45).

The production of tungsten carbide powders by direct carbothermic reduction of tungsten ores, belonging to the class of wolframite $(Fe,Mn)WO_4$ (iron and manganese tungstate), or of scheelite, $CaWO_4$ (calcium tungstate), is already known in the scientific literature. The process is carried out at an experimental level by reacting, at temperatures above 1000°C, typically at 1200°C and in inert atmosphere or under vacuum, mineral mixtures with phases of carbon (carbon black or graphite) previously ground to allow comminuting of the particles of solid phases and their optimal interspersion.

In this regard, Terry and Azubike (BS Terry, DC Azubike, Trans. IMM 1990 99, C175-180; Terry BS, DC Azubike, A. Chrysanthou, J. Mater. Sci. 1994, 29, 4300-4305) studied the direct reduction of scheelite by carbothermic reaction with graphite or coal, where the ratio scheelite/C employed ($CaWO_4$:C = 75:25 by mass) was such as to have a double amount of carbon compared to the stoichiometric amount required by the reaction desired:

$$CaWO_4 + 4C \rightarrow CaO + WC + 3CO(g) \qquad (1)$$

The authors used $CaWO_4$ and rather coarse (respectively 30 and 50 $\mu$m) carbon powder (graphite or coal), and failed to convert scheelite completely in WC and CaO, not even after 20 hours at 1200°C. Similar results were obtained by Johnston and Nguyen performing the carbothermic reduction of $CaWO_4$ with carbon black at 1227°C (R. F. Johnston, H.T. Nguyen, Materials Engineering 1996, 9: 7, 765-773).

At the end of the 90s, Welham studied the carbothermic reduction of a stoichiometric mixture of scheelite and graphite (i.e. with a ratio $CaWO_4$:C = 85.7:14.3 by mass). He found that the prolonged grinding (40 h) of the mixture allowed to decrease the reaction temperature, and to obtain the complete conversion of tungstate in WC after 1 h of treatment at 1100°C (NJ Welham, Mater. Sci. eng. 1998, A 248, 230-237; NJ Welham, Am. Inst. Chem. eng. J. 2000, 46, 68-71). The particles size of the tungsten carbide obtained were about 0.2 $\mu$m.

The positive role played by the preliminary size reduction of the tungsten/carbon mixture was also found in the carbothermic reduction of wolframite (J. Temuujin, M. Senna, T. Jadambaa, D. Byambasuren, J. Am. Ceram. Soc., 2005, 88:4, 983-985; K.J.D. MacKenzie, J. Temuujin, C. McCammon, M. Senna, J. Europ. Ceram. Soc. 2006, 26, 2581-2585). In that case, the size of the particles of WC, after treatment at 1100°C, resulted even smaller than those observed by Welham, i.e. equal to a few tens of nanometers (20-30 nm).

More recently, Singh and Pandey (H. Singh, OP Pandey, Ceramics International, 2013, 39, 785-790) reported the synthesis of nanocrystalline tungsten carbide ($\sim$ 35 nm) by carbothermic reduction at a temperature just under 1100°C. These authors were able to obtain the direct conversion of scheelite in WC powder at 1025°C (4 h), but they used both a very long prior grinding (100 h) of the mineral-coal mixture in a ball mill, and a very abundant carbon excess. The mixture prepared by Singh and Pandey, in fact, had a ratio by mass $CaWO_4$:C equal to 1:2, and therefore it contained a quantity of carbon twelve times higher than the stoichiometric amount. In the process suggested by Singh and Pandey, the residual oxides are leached first by dissolution with acid (HCl 1:1), then with NaOH (0.25 M). These authors, however, have not addressed the problem of removing the large excess of activated carbon that remains at the end of the process. The extent of the excess of carbon phase renders not usable the WC powder obtained, even after leaching with HCl and NaOH, to which the activated carbon is inert.

In a later work, the same Singh and Pandey (H. Singh, OP Pandey, Ceramics International, 2013, 39, 6703-6706) were able to lower the synthesis temperature of WC powder from scheelite by modifying the carbothermic reduction process. In the cited work, the authors have in fact described a process in which a mixture of scheelite, activated charcoal and metallic magnesium is placed into a sealed steel autoclave and heated at 800°C for 20 h. Also in this case the weight ratio scheelite:carbon was 1:2. The possibility of reducing the reaction temperature to 800°C is easily explained considering that magnesium assists the oxide reduction, according to the reaction:

$$CaWO_4 + 3Mg \rightarrow W + 3MgO + CaO.$$

The strong excess of carbon, which is not used to reduce the tungstate, is all available for the subsequent carburization of metallic tungsten:

$$W + C \rightarrow WC.$$

After leaching the oxide (CaO and MgO) with diluted acids it remains a WC with no other oxidic phases. In this process, in which the synthesis of WC from tungstate is carried out at lower temperatures than those adopted for the direct carbothermic reduction of scheelite, the added additive (metallic magnesium metal) actively participates in the ore reduction reaction, oxidizing irreversibly to MgO. Unfortunately, the process presents inconveniences at the industrial level, first of all because, also in this case, it involves the use of a very abundant excess of activated charcoal, which remains mostly unaltered even after reaction with the tungsten metal, and is found as such at the end of the process, together with the WC. Furthermore, the use of a process that uses powders or highly pyrophoric and oxidizable magnesium turnings, particularly if carried out in an autoclave, increases the safety issues and adds to the production costs.

A method already known since a long time to produce tungsten carbide powders at an industrial level by means of a carbothermic reaction, initially studied in Japan (US patent No. 4,008,090 by Sumitomo Electric Industries Ltd.), involves the direct carburization of $WO_3$. According to the cited patent, mixtures of $WO_3$ and coal are treated first at 1000-1600°C in nitrogen (reduction step), and thereafter at 1400 to 2000°C in hydrogen (carburizing step). The process is used for the production of ultrafine carbide powders (<0.5 - 0.1 $\mu$m) or submicron (<1.0 - 0.5 $\mu$m), and it does not represent a solution in any case to the problem of producing WC directly from tungstates present in the ores, as it uses tungsten oxide as a starting material. As is known, the $WO_3$ is industrially produced starting from ore through a series of complex hydrometallurgical treatments that result in the formation of ammonium paratungstate (APT), which in turn gives the oxide by calcination at 300-800°C.

A further method, already known since long time, to obtain the direct synthesis of tungsten carbide from tungsten ores is described in the US patents No. 3,379,503 and No. 4,834,963, relating to a process developed by Kennametal Inc. under the name *Macro Process* or *Menstruum process.* The process combines in a single stage aluminothermic reduction and carburization of tungsten ores (scheelite, wolframite or ferberite) to above 2500°C. In particular, starting from scheelite as enriched ore, metallic aluminum and calcium carbide charged are added in ovens designed to withstand both high temperatures and chemical attack by the reagents and, after initiation, the reagents develop a reaction strongly exothermic according to the scheme:

$$6\ CaWO_4 + 3\ CaC_2 + 10\ Al \rightarrow 6\ WC + 9\ CaO + 5\ Al_2O_3$$

The process illustrated gives rise to a stoichiometric carbide, with WC grains free of crystal defects (such as for instance, low-angle edges), which, however, are very large ($\geq$ 100 $\mu$m). Besides the fact that it is not possible to modulate the size of the coarse powders of WC obtained, if not by a subsequent milling, the mentioned process has the disadvantage of requiring very severe operating conditions, and poses environmental problems for the management of industrial residues that contain heavy metal salts.

It is evident from the foregoing that a method of producing tungsten carbide powder directly from ore enriched and carbon powder, which allows to reduce both the energy expenditure during the heat treatment (reducing the process temperature), and the production time (reducing, inter alia, the prior times of powders grinding), would be extremely advantageous. Additionally it would be advantageous, also, a process of the mentioned type which allows to avoid the use of overabundant carbon excesses, difficult to be managed at industrial level, and which allows, in predefined conditions, to obtain the carbide powder of predetermined particle size and variables according to the necessities.

As regards loans to which the powders of WC under discussion are meant, the technological properties of the artifacts of cemented tungsten carbide depend on microstructural parameters such as the phase binder content (typically consisting of cobalt, nickel alloys or carbolic acid) and on the dimensions of the WC grains in the sintered matter. The latter are related to the grain size of the WC powder used in the sintering process. Therefore, as the carbothermic reduction of tungstates leads to sub-micrometric powders of WC regardless of the process temperature (Polini R. et al., Int. J. Refract. Met. Hard Mater., 51 (2015) 289-300), it is also evident that it would be extremely beneficial to have a process for reduction of tungstates by carbothermic way, that allows to vary and/or modulate the particle size of the powders of WC obtained from the process, by suitably varying the operating parameters of the process itself.

## Summary of the invention

On the basis of the prior art described, the present invention therefore has the aim to provide a method for the direct production of tungsten carbide by means of carbothermic reaction of tungsten ores, such as scheelite ($CaWO_4$), in which the WC synthesis can take place at lower temperature and/or with shorter treatment times than previously proposed by the current technique, and preferably also by adopting a shorter time of milling of the initial powders of mineral and carbon phase, but without having to resort to the aid of reducing agents such as powders or chips of metals of groups IIA or IIIA of the periodic table (such as Mg or Al), which are characterized by high pyrophoricity and critical management aspects for large-scale productions.

In the light of the described prior art, the present invention has, as further aim, to provide a production technique of WC powders by carbothermic reaction of tungsten ores which, in addition to providing the desired product with treatment conditions less drastic than those proposed so far, also allows to predetermine the particle size, so as to obtain powders of different sizes depending on the conditions of treatment adopted.

In fact, although the known processes of carbothermic reduction of tungstates, such as those that form scheelite and wolframite, are suitable for the synthesis of submicrometric or nano-structured powders, hard metal manufacturers also have the need to procure powders having not only fine (0.8-1 $\mu$m), but also medium (2-3 $\mu$m) and coarse (4-6 $\mu$m) particle size. The availability of WC powders with different average particle size is a necessary prerequisite to be able to have different final size of the tungsten carbide grain in the final sintered and, consequently, to modulate the technological properties and use characteristics of the densified WC-Co.

In the context of the studies connected with the present invention, it has been taken into account the effect that some transition elements, in particular cobalt, nickel and iron, were found to have as promoters of the carburization of tungsten metal to tungsten carbide, when mixed in small amounts to the tungsten powder in the conventional process of production of the WC with gas streams of methane and hydrogen, known as gas-phase carburization, (S. Takatsu, Powder Metallurgy International 1978 10: 1, 13 -15; CF Davidson, GB Alexander, ME Wadsworth, "Catalytic effect of cobalt on the carburization kinetics of tungsten", Metallurgical Transactions A, August 1979, Vol. 10: 8, 1059-1069). In the cited literature, it is assumed that small amounts of cobalt powder, when mixed with the tungsten powder, carry out a catalytic action forming a thin film of W particles that, through the formation of ternary phases of W-C-Co system between the two metals and carbon, favors the complete carburization of tungsten metal and the formation of the final WC.

In the research that led to the present invention, it has also taken into account as described in the early 70s in US Patent 3,743,499 (L.H. Ramqvist et al., assignee Rederiaktebolaget Nordstjernan), which also relates to systems of tungsten metal, carbon and transition elements of group VIIIB of the periodic table of the elements, such as Fe, Ni and Co. According to that document, the doping of the tungsten powder with small amounts of these transition elements, or their compounds, in the course of carbothermic treatment production of WC powders at temperatures higher than 1000°C, typically in the range of 1400 to 1900°C, allows to obtain carbide particles size greater than possible in the absence of the dopant agent. For this purpose, the metal that is added to the mixture of W and C powders to increase the size of the resulting carbide grain is preferentially used not in the elemental state, but in the form of its chloride, which makes it possible to include the additive or in a solid powder form or in solution in a volatile solvent, to favor a more intimate interspersion of the various components.

Taking advantage of these tips to the possible formation of ternary phases in the W-C-Co system which in certain proportions and temperature conditions could favor the quantitative conversion of mixtures of W and C in tungsten carbide with a lower energy and time expenditure than it is possible in absence of the catalyst/doping agent, possible experimental conditions were studied for the direct synthesis of powders of WC, by means of carbothermic reaction, from the enriched tungsten ores, consisting substantially of calcium tungstate (scheelite), which could make use of a similar catalytic effect or promoter.

According to the present invention, it has been found that by making the direct synthesis reaction of the tungsten carbide starting from mixtures of calcium tungstate (scheelite), suitably pre-milled with graphite or charcoal as described in the prior art, but in presence of small amounts of cobalt, nickel or iron as an additive, it is possible to obtain the direct conversion of the tungstate present in scheelite to tungsten carbide by carbothermic reaction, with virtually total yields and in conditions much less drastic than those used in the literature cited.

More specifically, according to a first aspect of the invention, it has been found that by adding to the enriched ore and carbon mixture, small amounts, preferably in the order of 0.4 to 6% by weight on the total weight of the mixture, of transition elements of former group VIIIB (corresponding to the groups 8, 9 and 10 according to the new IUPAC nomenclature), (e.g. Co, Ni or Fe, or suitable amounts of related compounds, such as oxides, hydroxides. carbonates, basic carbonates, metallorganic compounds or other, which may give rise to the corresponding metal under the process conditions), it is possible to lower advantageously the temperature at which the direct reduction of tungstate is achieved, while obtaining a high yield ($\geq$ 98%) in WC.

Considering instead the addition of the same elements or additives compounds at higher processing temperatures, it has been found, according to a further aspect of the invention, that in the same system tungstate-carbon-additive metal at a temperature above 1200°C, and preferably above 1350°C, it is possible to obtain by the treatment, grain particle size of WC either fine (submicron) or medium (2-3 μM) and coarse (4-6 μM), suitably varying the additive metal content included in the mixture.

**Detailed description of the invention**

The present invention, therefore, specifically provides a process for the production of tungsten carbide (WC) powders of various grain sizes starting from scheelite ($CaWO_4$) by carbothermic reduction, comprising the following steps:

> a) milling powders of enriched scheelite (also in the form of enriched ore) with carbon powders, in a weight ratio $CaWO_4$:C of from 85.7:14.3 (stoichiometric ratio) to 84:16 (excess of C 14,13% by weight), for a total period of time from 8 to 120 hours;
> b) thermally treating the powders obtained from step a) at temperatures from 900 and 1500 °C, in an inert atmosphere or (typically $N_2$ or Ar) or under vacuum;
> c) purifying the powders obtained from step b) by leaching out the calcium oxides and any other oxides present in said powder with suitable solutions, basic and/or acidic, and subsequent washing;

characterized in that, in said milling step a), a total amount from 0,4 to 6% by weight, calculated on the total weight of the powders, of one or more transition metals of the former group VIIIB or one or more related compounds (such as oxides, hydroxides, carbonates, basic carbonates, or organometallic compounds), which may give rise to said metal under the process conditions, is added to said powders (said portion being in this case calculated with reference to molecular weight of each compound) acting as promoters of conversion agents in the carbide and/or growth activators of the WC grain.

With reference to the purification step mentioned above, it is noteworthy that in the tungsten mineral "enriched" other oxides may be present in addition to the tungstate. These remain unchanged, or react with CaO (for example, the silica gives calcium silicate: $CaO + SiO2 \rightarrow CaSiO_3$). In this case, all of these oxides will be properly leached to obtain pure WC.

According to some preferred embodiments of the invention, the one or more transition metals of the former group VIIIB are chosen among cobalt, nickel, iron and their mixtures or alloys, the choice of the cobalt being the most preferred because of its increased effectiveness shown by its addiction, both in promoting the total tungstate and carbon conversion in tungsten carbide (WC), and in fostering the growth of the WC grain produced to the desired size.

Specifically, according to the invention, the carbon powders that are used in preference to the proposed process are chosen among carbon black and graphite. As an alternative to pure carbon powder, it may be added to the mixture a powder able to give a carbon residue by pyrolytic decomposition, under the typical process conditions of the carbothermic reduction. The proportions of such a powder will be adequately proportioned to obtain the predetermined carbon content in the reaction mixture.

Preferably, according to the invention, the preliminary milling of the mixture consisting of tungstate and carbon in step a) is conducted for a total time between 12 and 48 h, the preferred durations of this operation being to be defined in function of the particle size of the powders of departure and the desired characteristics in the final tungsten carbide.

According to a first aspect of the invention, use is made of the addition (additive) of a transition metal of the former group VIIIB (or related com-places, as defined above) to the mixture of tungstate and carbon (carbon black, active carbon and graphite), and said additive mixture is subjected to a thermal treatment at temperatures of 900-1200°C, typically 950-1100°C, for a time varying from 1 h to 24 h, typically for 1-6 hours, and in a preferred mode for 1-3 hours. The weight ratio $CaWO_4$:C used is preferably comprised between the stoichiometric ratio (85.7:14.3) and 85:15, corresponding to a 5.8% by weight excess of carbon. In these conditions, the presence of the transition metal of former group VIIIB (which is typically selected from Co, Ni or Fe) allows to drastically reduce the time and/or temperature, to which occurs the total conversion in WC of the tungsten content in the ore.

In a preferred embodiment of the process according to the invention, said transition element of former group VIIIB is cobalt, and this is added to the enriched mineral powders in scheelite and to carbon powders in a total amount of 1.5 -3% by weight, calculated on the total powder weight.

According to a further aspect, the present invention relates to the ability to vary the size of the WC particles through the combination of amount of additive (metal of former Group VIIIB, or related compounds, as defined above) and temperature at which performs the carbothermic reduction assisted process. The addition of the additive allows to increase the size of the WC particles the more the higher the temperature is at which the carbothermic reduction reaction of the starting scheelite is carried out, or, for the same treatment temperature, the more the greater is the content of the additive catalyst/promoter of the grain growth added.

According to this further mentioned aspect of the invention, the thermal treatment b) is carried out at temperatures of between 1100 and 1450°C, preferably between 1200 and 1450°C, for a time comprised between 1 and 3 hours. The most preferred range of temperatures for the thermal treatment in this case lies between 1350 and 1430°C, temperatures which are above the eutectic temperature of WC-Co binary system (1320°C). Since, as is known, at temperatures above the eutectic in the WC-Co system a liquid phase will form containing the three elements:

$$WC_{(s)} + Co_{(s)} \rightarrow L$$

where L denotes the liquid phase containing Co and equimolar amounts of W and C, the growth of the WC grains is greatly favored in these conditions, as a result of the greater mobility of the atoms of W and C in the liquid phase.

According to some of its preferred embodiments, in the proposed procedure the transition element of the former group VIIIB is cobalt, which is added to the mineral powders enriched in scheelite and to carbon powders in concentrations varying from 0.5 to 6% by weight, calculated on the total weight of the powders. In this way may be obtained correspondingly, after the purification step c) of the obtained WC powders, average particle size of said powder increasing with the increase of the respective concentration of cobalt used.

From the foregoing, and as will be illustrated with experimental data in the following, the process developed with the present invention allows of rag-reach the following objectives:

i. reduce process time and/or temperatures to obtain the almost complete conversion of the tungsten content in the ore, in the form of tungstate ion, in carbide (WC) by reaction with carbon-rich powders (typically, but not exclusively, carbon blacks and graphite) in the presence of amounts of elements (or their alloys, or compounds), also in combination, of the former group VIIIB (typically Co, Fe and Ni) in an inert atmosphere or under vacuum;

ii. directly add the additive element (or a compound thereof) referred to in point i) to the tungstate-carbon phase mixture to be subjected to mechanical mixing;

iii. modulate the size of the WC particles during the reaction tungstate and carbon carrying out the process in the same conditions referred to in point i) and by controlling the particle size by means of the adjustment of the process temperature and/or concentration of the additive element (or its compound) added to the tungstate-carbon phase mixture.

## Brief description of the figures

The specific features of the invention, as well as the advantages thereof, will become more apparent with reference to the exemplary experimental work description reported in the following, and to the relative figures, in which:

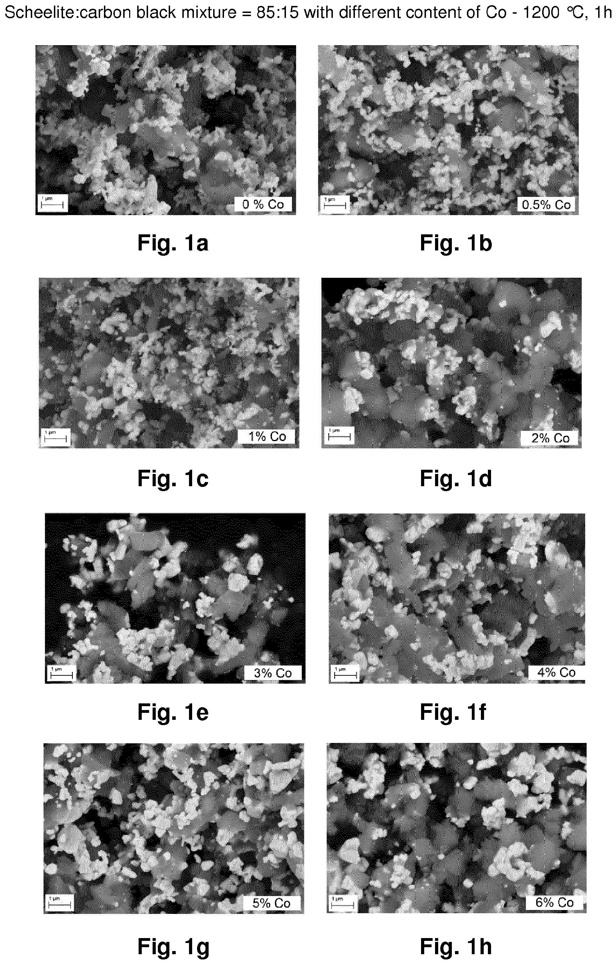

**Figures 1a - 1h** show micrographs from scanning electron microscope (SEM) of mixtures obtained by the process according to the invention starting from scheelite and carbon black with a weight ratio of 85:15 and different levels of cobalt as a catalyst/additive dopant, after treatment in an argon atmosphere for 1 hour at 1200°C;

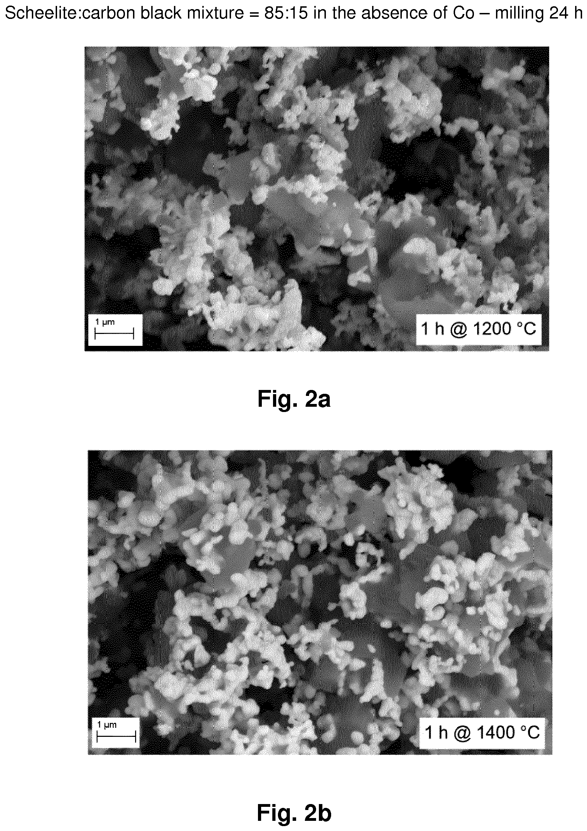

**Figures 2a** and **2b** show, for comparison, SEM micrographs of mixtures obtained from scheelite and carbon black with a weight ratio of 85:15 in the absence of cobalt, respectively, after treatment at 1200 °C and 1400°C for 1 hour;

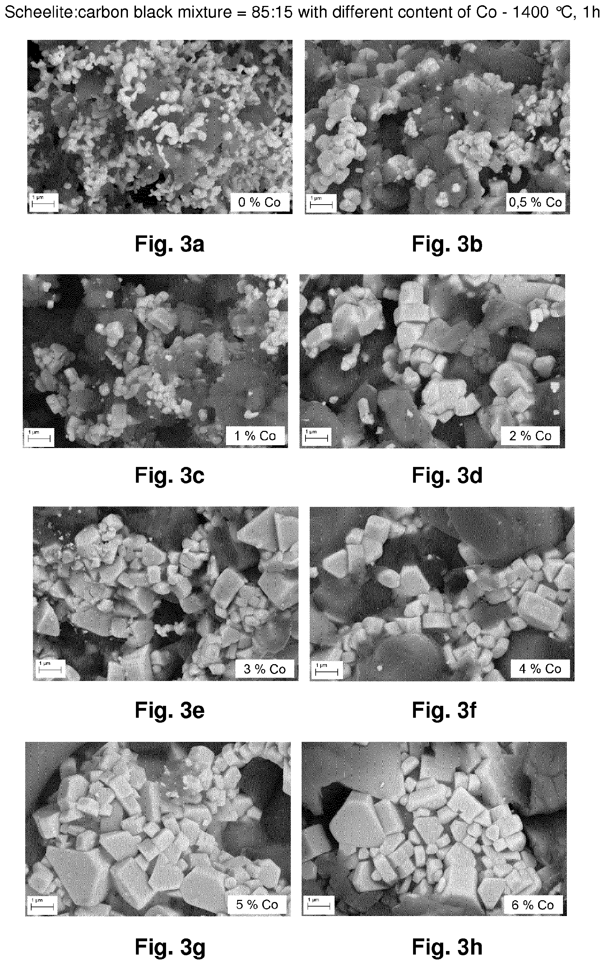

**Figures 3a - 3h** show SEM micrographs of mixtures obtained by the process according to the invention with the same respective compositions of Figure 1, but after treatment in an argon atmosphere for 1 hour at 1400°C;

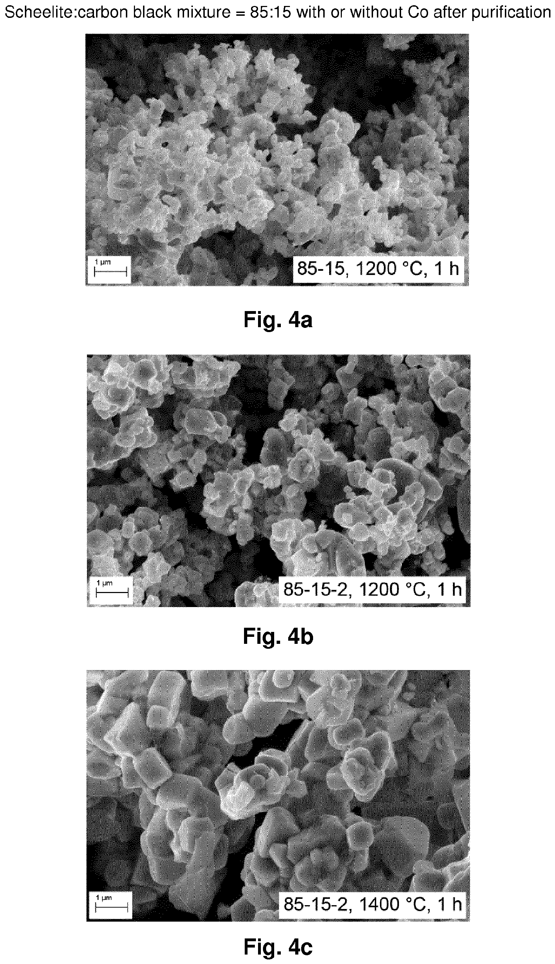

**Figures 4a, 4b** and **4c** respectively show SEM micrographs of the particles of WC obtained after purification (elimination of CaO) from the mixtures of Figure 2a (treatment in the absence of cobalt at 1200°C for 1 hour) and from the mixtures of Figures 1h and 3h (treatment in the presence of cobalt, respectively at 1200 °C and 1400 °C for 1 hour);

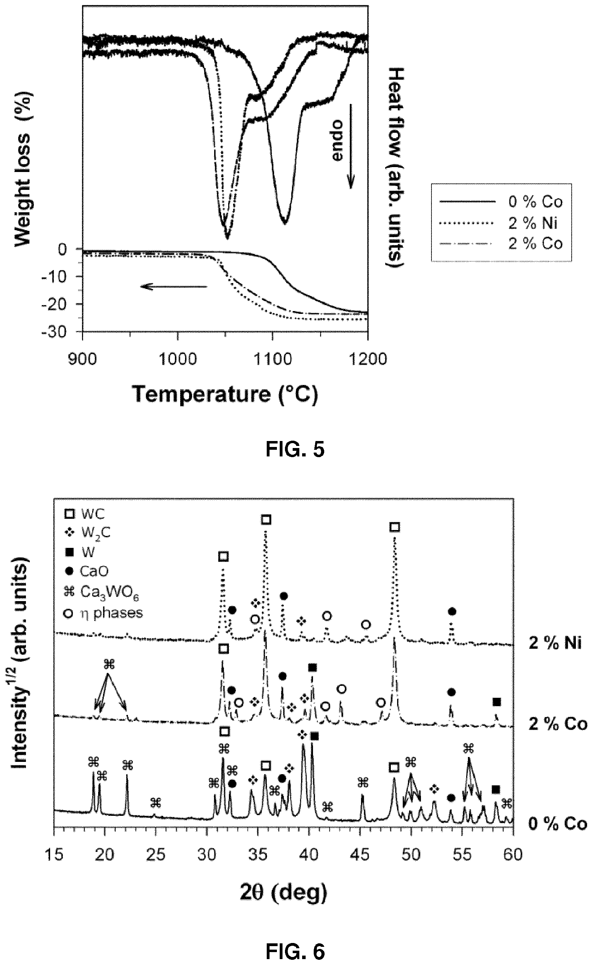

**Figure 5** shows the profiles of simultaneous thermogravimetric and differential thermal analysis (TGA-DTA) of mixtures obtained from step a) of the process according to the invention starting from scheelite and carbon black with a weight ratio of 85.67:14.33 and absence of cobalt, or with levels of 2% in weight of, respectively, cobalt or nickel, after grinding in a ball mill for 8 hours;

**Figure 6** shows the mixtures obtained by the process of the X-ray diffraction spectra (XRD) according to the invention starting from scheelite and carbon black with a weight ratio of 85.67:14.33 and in the absence of cobalt, or with contents of 2% by weight, respectively, of cobalt or nickel, after grinding in a ball mill for 24 hours and subsequent heat treatment, in an argon atmosphere for 5 hours to 1000°C; and

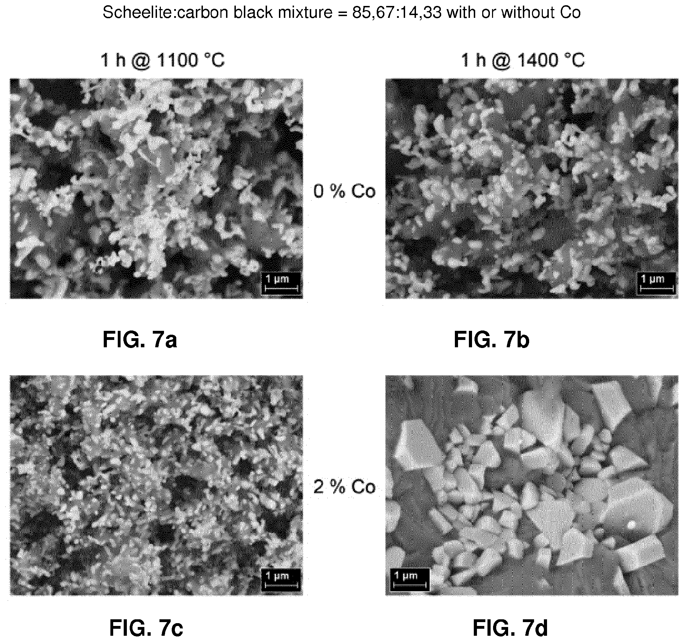

**Figures 7a - 7d** show micrographs from scanning electron microscope (SEM) of mixtures obtained by the process according to the invention starting from scheelite and carbon black with a weight ratio of 85.67:14.33 and respectively in the absence of cobalt or with a cobalt content of 2% by weight, after treatment in an argon atmosphere for 1 hour at 1100°C and 1400°C respectively.

## Examples

Some specific embodiments of the process according to the invention are described below by way of example, but without limitation, together with the results of carried out experiments.

EXAMPLE 1

**Mixtures with scheelite and carbon black with an excess of 5,8 % by weight of carbon**

Two mixtures were prepared, with a mass of 100 g each, containing scheelite and carbon black in 85:15 ratio by weight (85 g $CaWO_4$ + 15-g Thermax carbon black N990 of Cancarb Ltd.), and so with 5.8% by weight of carbon in excess in respect to the stoichiometric amount needed to make the reaction take place completely (1) above reported (which corresponds to a weight ratio $CaWO_4$:C equal to 85.7:14.3). To only one of the two mixtures were also added 2 g of cobalt.

The mixtures are indicated with the initials 85-15 (85 g scheelite and 15 g carbon black) and 85-15-2 (85 g scheelite, 15 g carbon black and 2 g Co). These mixtures were subjected to 24 h of milling in a planetary ball mill (Retsch PM 400) with 300 revolutions/min rotation speed. Each of the mill container (500 ml volume), and the balls (total weight of 1 kg and a diameter of 3.9 mm each), were made in hard metal. The ratio spheres:powder by mass was thus 10:1. For milling 230 ml of liquid were added to the powder (Carbsyn 110, a non-flammable viscous liquid used as an auxiliary for the milling in ball mills).

The 85-15 and 85-15-2 mixtures were then heat-treated under Ar flow (100 l/h) at 1100°C for 1 h or at 950°C, for 12 h. In all cases the rate of heating to the final temperature was 3°C/min. An aliquot of the 85-15 mixture was also treated for 5 h at 1100°C. After treatment, the mixtures were analyzed by X-ray diffraction (XRD) to determine the crystalline phases present. In all cases the presence of other oxides in addition to $Ca(OH)_2$ and/or CaO is not reported to indicate the total transformation of scheelite. The tungsten was detectable only in the phases WC, $W_2C$ and W. The relative amounts of said tungsten phases were estimated from the intensities of the peaks of WC ($I_{WC}$), of W2C ($I_{W2C}$) and W ($I_W$) by using the following expressions:

$$\% \, WC = 100 \cdot I_{WC}/(\, I_{WC} + I_{W2C} + I_W)$$

$$\% \, W_2C = 100 \cdot I_{W2C}/(\, I_{WC} + I_{W2C} + I_W)$$

$$\% \, W = 100 \cdot I_W/(\, I_{WC} + I_{W2C} + I_W)$$

The results of the XRD characterization of the tungsten-containing phases are summarized in the following Table 1.

Table 1

| Mixture | Treatment temperature | Treatment duration | %WC | %$W_2$C | %W |
|---------|----------------------|--------------------|-----|---------|-----|
| 85-15 | 1100 °C | 1 h | 71 | 27 | 7 |
| 85-15 | 1100 °C | 5 h | 96 | 3 | 1 |
| 85-15-2 | 1100 °C | 1 h | 98 | 2 | 0 |
| 85-15 | 950 °C | 12 h | 50 | 43 | 7 |
| 85-15-2 | 950 °C | 12 h | 98 | 2 | 0 |

The XRD data shows clearly that the presence of Co allows to obtain a significantly higher yield of WC both at 1100°C and at 950°C. At this temperature the almost complete conversion of scheelite in WC is made possible, after 12 h, only in the presence of metal. In addition, treatment at 1100°C for 1 h with 2% of Co provides a higher yield of WC also compared to the mixture without Co but treated for a time five times higher.

EXAMPLE 2

**Mixtures with scheelite and graphite with an excess of 5,8 % by weight of carbon**

Two mixtures were prepared, with a mass of 100 g each, containing scheelite and microcrystalline graphite in the ratio 85:15 by weight (85 g of $CaWO_4$ + 15 g of graphite, then with 5.8% of carbon in excess in respect to the stoichiometric amount). To only one of the two mixtures were also added 2 g of cobalt.

Mixtures are described below with acronyms 85-15G (85 g scheelite and 15 g graphite) and 85-15G-2 (85 g scheelite, 15 g graphite and 2 g Co). These mixtures were subjected to 24 h of milling as in Example 1.

The 85-15G and 85-15G-2 mixtures were then heat-treated under Ar flow (100 l/h) for 1 h at 1100, 1200 or 1250°C. In all cases heating speeds up to the final temperature was 3°C/min.

After treatment, the mixtures were analyzed by X-ray diffraction (XRD) to determine the crystalline phases present. In all cases it is not detected the presence of other oxides in addition to Ca (OH) 2 and/or CaO, to indicate the total transformation of scheelite.

The results of the XRD characterization of the tungsten-containing phases are summarized in Table 2.

Table 2

| Mixtures | \multicolumn{9}{c}{1 hour thermic treatment at different temperatures} |
|---|---|

| Mixtures | %WC | | | %W$_2$C | | | %W | | |
|---|---|---|---|---|---|---|---|---|---|
| | 1100 °C | 1200 °C | 1250 °C | 1100 °C | 1200 °C | 1250 °C | 1100 °C | 1200 °C | 1250 °C |
| 85-15G | 85 | 95 | 96 | 13.5 | 4.5 | 3 | 2 | 0.3 | 0.3 |
| 85-15G-2 | 97 | 96 | 99 | 2 | 3 | 0.3 | - | 1.0 | 0.1 |

The XRD data shows clearly that the presence of Co in the mixture allows to obtain, after 1 h of treatment at 1100°C, a yield higher than that obtainable in the WC to 1250°C without Co, even with the same treatment time.

EXAMPLE 3

**Mixtures with scheelite and carbon black with an excess of 5,8 % by weight of carbon**

Four mixtures, of 100 g each, containing scheelite and carbon black in the ratio 85:15 by weight (85 g of $CaWO_4$ + 15 g of carbon black Cancarb Thermax N990) were prepared as described in Example 1. In three of these mixtures, indicated with 85-15-05, 85-15-2 and 85-15-2Ni, were also added, before grinding, respectively, 0.5 g of Co, 2 g of Co and 2 g of Ni.

After 24 h in a grinding mill, the four mixtures were treated in an argon flow at 1200°C for 1 h with a heating speed of 3°C/min. After treatment, the mixtures were analyzed by X-ray diffraction (XRD) to determine the crystalline phases present. In all cases it is not detected the presence of compounds with oxygen in addition to $Ca(OH)_2$ and/or CaO, to indicate the total transformation of scheelite. The tungsten was detectable only in the phases WC, $W_2C$ and W. The relative amounts of said phases containing tungsten were determined as described in Example 1.

The results of the XRD characterization of the tungsten-containing phases are reported in Table 3.

Table 3

| Mixture | Treatment temperature | Treatment duration | %WC | %W$_2$C | %W |
|---|---|---|---|---|---|
| 85-15 | 1200 °C | 1 h | 95.4 | 3.3 | 1.3 |
| 85-15-05 | 1200 °C | 1 h | 97.7 | 1.7 | 0.6 |
| 85-15-2 | 1200 °C | 1 h | 99.0 | 1.0 | 0 |
| 85-15-2Ni | 1200 °C | 1 h | 97.0 | 2.6 | 0.4 |

The data show that the presence of Co led to a higher yield in the WC even when added to the scheelite:carbon mixture in an amount of only 0.5% by weight approximately, allowing to halve the residual amount of $W_2C$ and W compared to the mixture without added metals (mix 85-15).

The addition of about 2% of Ni to the mixture also exerts a positive effect, allowing to reduce the overall amount

of $W_2C$ and W from 4.6% of the 85-15 mixture to 3.0% of 85-15-2Ni mixture.

EXAMPLE 4

**Mixtures with scheelite and carbon black with an excess of 0,24 % by weight of carbon**

Three mixtures $CaWO_4$:C containing 90 g of pure $CaWO_4$ (Sigma-Aldrich), 15.05 g of Thermax N990 carbon black (Cancarb) and 0 or 2% by weight of Co or Ni were prepared by grinding in a planetary mill spheres (Retsch, PM400). The weight ratio $CaWO_4$:C was 85,67:14,33, and then the excess of carbon than the stoichiometric amount required for the complete conversion into calcium tungstate was only 0.24%.

The powders were loaded into a milling jar of 250 ml capacity of tungsten carbide with 700 g of spheres of a diameter of 3.9 mm each, which are also made of hard metal (ratio by mass spheres:powder equal to 7:1) and 100 ml of liquid (2-propanol). The mixtures were subjected to grinding to a 300 rev/min rotation speed for 8 hours.

The results of the XRD characterization of the tungsten-containing phases are summarized in Table 4. In the table the various mixtures are indicated by a code that includes the acronym '8RA', to indicate in the grinding hours in Retsch mill with alcohol (isopropanol).

Table 4

| Mixture | Excess C | % Co | % Ni | Milling Time | Liquid |
|---|---|---|---|---|---|
| 85.67-14.33-8RA | 0,24 % | - | - | 8 h | 2-propanol |
| 85.67-14.33-2Co-8RA | 0,24 % | 2 | - | 8 h | 2-propanol |
| 85.67-14.33-2Ni-8RA | 0,24 % | - | 2 | 8 h | 2-propanol |

The profiles of simultaneous thermogravimetric and differential thermal analysis (TGA-DTA) of the powders obtained by grinding are shown in the attached **Figure 5.** As it can be seen from the profiles of the DTA, mixtures containing 2% by weight of cobalt or nickel confirm the results obtained previously by the authors (R. Polini, E. Palmieri, G. Marcheselli, "Nanostructured tungsten carbide synthesis by carbothermic reduction of scheelite: A comprehensive study", Int. J. Refract. Met. Hard Mater. 51 (2015) 289-300), and that is that of the $CaWO_4$ reduction reaction associated to weight loss, and the concomitant release of CO, take place in two successive stages:

1) reduction of $CaWO_4$ to form $Ca_3WO_6$, W and gaseous CO;
2) the $Ca_3WO_6$ carbon reduction to form CaO, W and gaseous CO.

In this regard it is important to note that the reduction of the mixtures also containing Co or Ni began and ended at lower temperatures, demonstrating that the presence of Co or Ni accelerates the carbothermic reduction of scheelite.

EXAMPLE 5

**Mixtures with scheelite and carbon black with an excess of 0,24 % by weight of carbon**

Three mixtures $CaWO_4$:C containing 90 g of pure $CaWO_4$ (Sigma-Aldrich), 15.05 g of Thermax N990 carbon black (Cancarb) and 0 or 2% by weight of Co or Ni were prepared by grinding in a ball mill (Retsch, Planetary Ball Mill PM400). The weight ratio $CaWO_4$:C was 85,67:14,33.

For the milling, the powders were treated as in Example 4 except for the fact that as auxiliary grinding liquid 150 ml of Carbsyn 100 were used, and that the milling duration was 24 hours.

The results of the XRD characterization of the tungsten-containing phases are summarized in Table 5.

Table 5

| Mixture | Excess C | % Co | % Ni | Milling time | Liquid |
|---|---|---|---|---|---|
| 85.67-14.33-8RA | 0,24 % | - | - | 24 h | Carbsyn 110 |
| 85.67-14.33-2Co-8RA | 0,24 % | 2 | - | 24 h | Carbsyn 110 |
| 85.67-14.33-2Ni-8RA | 0,24 % | - | 2 | 24 h | Carbsyn 110 |

The resulting powder mixtures, which had a ratio $CaWO_4$:C equal to 85.67:14.33 by weight and contained 0 or 2% by weight of transition metal (Co or Ni), were treated in a tubular furnace in an argon flow (100 l/h) for 5 hours to 1000°C, heating the oven at a rate of 3°C/min.

The attached **Figure 6** shows the X-ray diffraction spectra (XRD) of the powder thus obtained. In the diagram it has been used the square root of the intensity, so as to make more visible peaks.

As can be noted, after heat treatment no more $CaWO_4$ is noted in the samples. The tricalcium tungstate ($Ca_3WO_6$) was clearly present in the sample not admixed with cobalt or with nickel, while the $Ca_3WO_6$ peaks were barely visible in the XRD spectra of samples containing Co or Ni. So, the addition of Co or Ni has allowed to drastically reduce the residual content of $Ca_3WO_6$ downstream the heat treatment, thus further confirming the catalytic role of the transition metal in the carbothermic reduction of scheelite.

Furthermore, **Figure 6** shows that the relative intensities of the peaks of WC, in comparison with the intensities of the peaks of W2C and W, were higher in samples additivated with Co or Ni, thereby confirming that the metal of transition actually influences the kinetics of carburization of tungsten metal that forms in the reduction stages 1) and 2) described in the previous example.

The addition of small quantities of Co or Ni units has determined the presence of phases eta ($\eta$) ($M_6C$ and/or $M_{12}C$), in particular stages of formula $Co_xW_yC$ and $Ni_xW_yC$.


EXAMPLE 6

**Mixtures with scheelite and carbon black with an excess of 0,24 % by weight of carbon**

Mixtures 85.67-14.33-8RA and 85.67-14.33-2Co-8RA, prepared as described in Example 4 (Table 4), were treated in a tubular furnace in an argon flow (100 l/h) for 1 hour at 1100°C or 1400°C, with speed of re-heating of 3°C/min.

The attached **Figures 7a - 7d** show the micrographs of scanning electronic microscope (SEM) of the mixtures thus obtained in the presence or absence of a content of 2% by weight of cobalt, for treatments at both temperatures. The tungsten carbide is visible as the lighter phase, while the gray phase is CaO, formed together with the toilet according to the reaction $CaWO_4 + 4C \rightarrow WC + CaO + 3CO$. It is to be noted that the heat treatment at higher temperature produces significantly larger grains of WC (1-3 $\mu M$) only when the cobalt is present in the mixture. On the contrary, in the absence of cobalt only nanostructured particles were obtained of WC, of size from a few dozen to a few hundred nanometers, regardless of the temperature.


**Assessment of the effect of cobalt carburization and study of morphology and microstructure of resulting WC**

All the data of the attached **Figures 1-4** refer to $CaWO_4$:carbon black mixtures prepared as described in Example 1, added or not with metallic Co before grinding, then milled and finally treated in a tubular furnace under Ar flow for 1 h at various temperatures (re-heating ramp of 3°C/min), for 1 h.

Referring to **Figure 1b-1h**, they show the results of experimentation of the invention process of scheelite:carbon black mixtures (Thermax N990 Cancarb) with a weight ratio of 85:15 and different levels of Co (0.5%, 1 %, 2%, 4%, 5% and 6% by weight) after treatment in Ar for 1 h at 1200°C and before the final purification, while in **Figure 1a** is shown the corresponding case in the absence of Co. In the micrographs are highlighted tungsten carbide (WC, lighter phase) and calcium oxide (CaO, darker phase).

It can be observed as the presence of Co has slightly changed the morphology and size of the WC particles, increasing the average size of approximately a factor two, even if in all the samples the size of the WC particles are still classifiable as submicron.

More specifically, while **Figure 1a** shows that the WC particles obtained after carbothermic reduction of scheelite in 'typical' operative conditions, as precisely at 1200°C for 1 h - without added Co - have sizes of 0,2-0.3 $\mu m$, the other micrographs show that the addition of Co allows to obtain, after the same treatment, particles double-sized.

The evaluation of the effect of treatment temperature on the grain size of WC in the absence of the additive conversion promoter/activator of the grain growth according to the invention is presented in more detail in **Figures 2a and 2b,** which show the morphology of the WC obtained after treatment at 1200°C or 1400°C for 1 h in the absence of cobalt. It can be noted that, despite the higher temperature treatment, at 1400°C a significant increase in the average size of WC particles is not observed (lighter phase), which are nonetheless submicrometer;

Thus, **Figures 2a** and **2b** show how the only increase in the temperature of 1200 to 1400°C does not lead to a significant variation of average dimensions of the particles without the addition of Co.

In experiments analogous to those presented in **Figures 1a-1h,** but carried out at the temperature of 1400°C, which are illustrated by micrographs of **Figures 3a-3h,** it is noted that: 1) a Co content equivalent to 0,5-1% has allowed to have a slight increase in size of the WC particles up to an average value of about 0.5 microns, 2) a Co content between 2 and 4% has allowed to have average sized particles of about 1 micron, and 3) concentrations of 5-6% Co have allowed to have average sizes of the WC particles of 2-3 microns.

This permits the conclusion that if the process according to the invention is carried out at temperatures higher than 1200°C, typically to 1400°C, WC particles of size even ten times greater, up to about 2-3 microns, are obtained.

With reference to **Figures 4a-4c,** finally, these show in an even clearer way the size of the WC particles after purification (elimination of CaO), carried out by leaching with HCl 1 M.

Whereas the heat treatment at a temperature of 1200°C in the absence or in the presence of 2% by weight of Co, the comparison between the **Figures 4a** and **4b** shows the effect of the presence of the additive according to the invention on the final dimensions of the WC particles obtained, highlighting the achievement of particle size approximately double compared to the same process conducted without Co. Considering the effect of the addition of 2% by weight of Co after heat treatment at a temperature of 1400°C, the **Figure 4c** shows the attainment of still higher particle size than those achievable by heat treatment at 1200°C, and approximately an order of magnitude greater than those obtainable by the same process conducted in the absence of Co.

In conclusion, the presence of 2 g Co per 100 g of scheelite/carbon black mixture allowed to move from a submicron morphology ($\leq$ 0.2 m) of the tungsten carbide powder obtained by the carbothermic reduction of scheelite to a fine particle size (1 $\mu$m) of the powder after treatment to 1400°C. Similarly a further experimentation has shown that concentrations of 5-6% of Co in the starting mixture of scheelite and carbon allow to obtain, under conditions corresponding to those reported above, medium size of WC particles of about 2 $\mu$m.

Analogous experiments were conducted using nickel as an additive promoter of conversion into carbide and/or activator of the WC grain growth, and it has been observed a similar effect of the presence of this element on the final yield of the WC of the carbothermic reduction of scheelite, although to a slightly lesser extent than cobalt.

In view of the foregoing it is to be noted, finally, that the catalytic effect of Co (and Ni, and other transition metals of the former group VIIIB or their suitable compounds) on the yield in the WC of the carbothermic reduction process of the scheelite proposed undoubtedly has the advantage of allowing the adoption of initial grinding conditions less "energetic" than that proposed by the prior art. Consequently, the entire process can be done in conditions more economic and more easily scalable to an industrial level.

**Claims**

1.  A process for producing tungsten carbide (WC) powders of various grain sizes starting from scheelite (CaWO$_4$) by carbothermic reduction, said process comprising the following steps:

    a) milling powders of enriched scheelite ore with carbon powders, in a weight ratio CaWO$_4$:C of from 85.7:14.3 to 84:16, for a total period of time from 8 to 120 hours;
    b) thermally treating the powders obtained from step a) at temperatures from 900 and 1500 °C, in an inert atmosphere or under vacuum;
    c) purifying the powders obtained from step b) by leaching out the oxides remaining in said powders, followed by washing;

    **characterized in that**, in said milling step a), a total amount from 0,4 to 6% by weight, calculated on the total weight of the powders, of one or more transition metals of the groups 8, 9 and 10 or a correspondingly calculated weight amount of one or more oxides, hydroxides, carbonates, basic carbonates or metallorganic compounds thereof which may give rise to said transition metals or alloys thereof in the process conditions, is added to said powders, with the function of agents enhancing the conversion to carbide and/or activating the growth of the WC particles.

2.  A process according to claim 1, wherein said one or more transition metals of the former group VIIIB are selected from cobalt, nickel, iron and mixtures thereof.

3.  A process according to claims 1 or 2, wherein said carbon powders are selected from carbon black and graphite.

4.  A process according to any one of claims 1-3, wherein said milling of step a) is carried out for a total period of time of from 12 to 24 hours.

5.  A process according to any one of claims 1-4, wherein said weight ratio CaWO$_4$:C is from 85.7:14.3 e 85:15.

6.  A process according to any one of claims 1-5, wherein said thermal treatment b) is carried out at temperatures from 950 to 1200 °C for a period of time from 1 to 24 hours.

**7.** A process according to claim 6, wherein said thermal treatment b) has a duration of 1 to 12 hours.

**8.** A process according to claim 7, wherein said treatment has a duration of 1 to 6 hours.

**9.** A process according to any one of claims 1-5, wherein said transition element of the former group VIIIB is cobalt, and it is added to the enriched scheelite ore powders and carbon powders in a total amount of 1.8-3% by weight, calculated on the total weight of the powders.

**10.** A process according to any one of claims 1-5, wherein said thermal treatment b) is carried out at temperatures from 1100 to 1450 °C, for a period of time from 1 to 3 hours.

**11.** A process according to claim 10, wherein said temperatures are between 1200 and 1450 °C.

**12.** A process according to claim 11, wherein said temperatures are between 1320 and 1420 °C.

**13.** A process according to claim 10, wherein said transition element of the former group VIIIB is cobalt.

**14.** A process according to claim 13, wherein said cobalt is added to the enriched scheelite ore powders and carbon powders in concentrations variable from 0.5 to 6 % by weight, calculated on the total weight of the powders thereby obtaining, after said step c) of purification of the WC powders so obtained, particles with an average particle size which increases as the respective concentration of cobalt used is increased.

**Patentansprüche**

**1.** Verfahren zur Herstellung von Wolframcarbid (WC)-Pulvern mit variierenden Korngrößen durch carbothermische Reduktion, ausgehend von Scheelit ($CaWO_4$), wobei das Verfahren die folgenden Schritte umfasst:

a) Mahlen von Pulvern von angereichertem Scheeliterz mit Kohlenstoffpulvern, in einem Gewichtsverhältnis $CaWO_4$:C von 85,7:14,3 bis 84:16, für einen Gesamtzeitraum von 8 bis 120 Stunden;
b) thermische Behandlung der aus Schritt a) erhaltenen Pulver bei Temperaturen von 900 bis 1500°C in einer inerten Atmosphäre oder unter Vakuum;
c) Aufreinigung der aus Schritt b) erhaltenen Pulver durch Auslaugen der in diesen Pulvern verbliebenen Oxide, gefolgt von Waschen;

**dadurch gekennzeichnet, dass** in dem Mahlschritt a) eine Gesamtmenge von 0,4 bis 6 Gewichtsprozent, bezogen auf das Gesamtgewicht der Pulver, an einem oder mehreren Übergangsmetall(en) der Gruppen 8, 9 und 10 oder eine entsprechend berechnete Gewichtsmenge an einem oder mehreren Oxiden, Hydroxiden, Carbonaten, basischen Carbonaten oder metallorganischen Verbindungen davon, welche unter den Verfahrensbedingungen diese Übergangsmetalle oder Legierungen davon ergeben können, den Pulvern zugesetzt wird, mit der Funktion von Mitteln zur Förderung der Überführung in Carbid und/oder zur Aktivierung des Wachstums der WC-Partikel.

**2.** Verfahren nach Anspruch 1, wobei das eine oder die mehreren Übergangsmetall(e) der früheren Gruppe VIIIB aus Kobalt, Nickel, Eisen und Mischungen davon ausgewählt ist bzw. sind.

**3.** Verfahren nach den Ansprüchen 1 oder 2, wobei die Kohlenstoffpulver aus Ruß und Graphit ausgewählt sind.

**4.** Verfahren nach irgendeinem der Ansprüche 1-3, wobei das Mahlen von Schritt a) für einen Gesamtzeitraum von 12 bis 24 Stunden durchgeführt wird.

**5.** Verfahren nach irgendeinem der Ansprüche 1-4, wobei das Gewichtsverhältnis $CaWO_4$:C 85,7:14,3 bis 85:15 beträgt.

**6.** Verfahren nach irgendeinem der Ansprüche 1-5, wobei die thermische Behandlung b) bei Temperaturen von 950 bis 1200°C für einen Zeitraum von 1 bis 24 Stunden durchgeführt wird.

**7.** Verfahren nach Anspruch 6, wobei die thermische Behandlung b) eine Dauer von 1 bis 12 Stunden hat.

**8.** Verfahren nach Anspruch 7, wobei die Behandlung eine Dauer von 1 bis 6 Stunden hat.

**9.** Verfahren nach irgendeinem der Ansprüche 1-5, wobei das Übergangselement der früheren Gruppe VIIIB Kobalt ist und den Pulvern von angereichertem Scheeliterz und Kohlenstoffpulvern in einer Gesamtmenge von 1,8-3 Gew.-%, bezogen auf das Gesamtgewicht der Pulver, zugesetzt wird.

**10.** Verfahren nach irgendeinem der Ansprüche 1-5, wobei die thermische Behandlung b) bei Temperaturen von 1100 bis 1450°C für einen Zeitraum von 1 bis 3 Stunden durchgeführt wird.

**11.** Verfahren nach Anspruch 10, wobei die Temperaturen zwischen 1200 und 1450°C liegen.

**12.** Verfahren nach Anspruch 11, wobei die Temperaturen zwischen 1320 und 1420°C liegen.

**13.** Verfahren nach Anspruch 10, wobei das Übergangselement der früheren Gruppe VIIIB Kobalt ist.

**14.** Verfahren nach Anspruch 13, wobei das Kobalt den Pulvern von angereichertem Scheeliterz und Kohlenstoffpulvern in Konzentrationen zugesetzt wird, die von 0,5 bis 6 Gew.-%, bezogen auf das Gesamtgewicht der Pulver, variieren können, wodurch nach dem Schritt c) der Aufreinigung der so erhaltenen WC-Pulver Partikel mit einer mittleren Teilchengröße erhalten werden, welche zunimmt, wenn die jeweilige Konzentration des verwendeten Kobalts erhöht wird.

**Revendications**

**1.** Procédé de fabrication de poudres de carbure de tungstène (WC) de différentes granulométries à partir de scheelite ($CaWO_4$) par réduction carbothermique, ledit procédé comprenant les étapes suivantes :

   a) broyer des poudres de minerai de scheelite enrichie avec des poudres de carbone, avec un rapport pondéral $CaWO_4$:C allant de 85,7:14,3 à 84:16, pendant une période totale de 8 à 120 heures ;
   b) traiter thermiquement les poudres obtenues à l'étape a) à des températures de 900 et 1500°C, dans une atmosphère inerte ou sous vide ;
   c) purifier les poudres obtenues à l'étape b) par lessivage des oxydes restant dans lesdites poudres, puis par lavage ;

   **caractérisé en ce que**, dans ladite étape de broyage a), une quantité totale allant de 0,4 à 6 % en poids, calculée par rapport au poids total des poudres, d'un ou plusieurs métaux de transition des groupes 8, 9 et 10 ou une quantité pondérale calculée de manière correspondante d'un ou plusieurs oxydes, hydroxydes, carbonates, carbonates basiques ou composés organiques de ceux-ci pouvant donner naissance à ces métaux de transition ou des alliages de ceux-ci dans les conditions du procédé, est ajoutée auxdites poudres, avec la fonction d'agents augmentant la conversion en carbure et/ou activant la croissance des particules de WC.

**2.** Procédé selon la revendication 1, dans lequel lesdits un ou plusieurs métaux de transition de l'ancien groupe VIIIB sont choisis parmi le cobalt, le nickel, le fer et leurs mélanges.

**3.** Procédé selon la revendication 1 ou 2, dans lequel lesdites poudres de carbone sont choisies parmi le noir de carbone et le graphite.

**4.** Procédé selon l'une quelconque des revendications 1 à 3, dans lequel ledit broyage de l'étape a) est réalisé pendant une période de temps totale de 12 à 24 heures.

**5.** Procédé selon l'une quelconque des revendications 1 à 4, dans lequel ledit rapport pondéral $CaWO_4$:C est compris entre 85,7:14,3 et 85:15.

**6.** Procédé selon l'une quelconque des revendications 1 à 5, dans lequel ledit traitement thermique b) est réalisé à des températures de 950 à 1200°C pendant une période de temps de 1 à 24 heures.

**7.** Procédé selon la revendication 6, dans lequel ledit traitement thermique b) a une durée de 1 à 12 heures.

**8.** Procédé selon la revendication 7, dans lequel ledit traitement a une durée de 1 à 6 heures.

**9.** Procédé selon l'une quelconque des revendications 1 à 5, dans lequel ledit élément de transition de l'ancien groupe VIIIB est le cobalt, et il est ajouté aux poudres de minerai de scheelite enrichie et aux poudres de carbone en une quantité totale de 1,8 à 3% en poids, calculée par rapport au poids total des poudres.

**10.** Procédé selon l'une quelconque des revendications 1 à 5, dans lequel ledit traitement thermique b) est effectué à des températures de 1100 à 1450°C, pendant une période de temps de 1 à 3 heures.

**11.** Procédé selon la revendication 10, dans lequel lesdites températures sont comprises entre 1200 et 1450°C.

**12.** Procédé selon la revendication 11, dans lequel lesdites températures sont comprises entre 1320 et 1420°C.

**13.** Procédé selon la revendication 10, dans lequel ledit élément de transition de l'ancien groupe VIIIB est le cobalt.

**14.** Procédé selon la revendication 13, dans lequel ledit cobalt est ajouté aux poudres de minerai de scheelite enrichie et aux poudres de carbone dans des concentrations variables de 0,5 à 6 % en poids, calculées par rapport au poids total des poudres, obtenant ainsi, après ladite étape c) de purification des poudres de WC ainsi obtenues, des particules ayant une granulométrie moyenne qui augmente à mesure que la concentration respective de cobalt utilisée augmente.

Scheelite:carbon black mixture = 85:15 with different content of Co - 1200 °C, 1h

Fig. 1a

Fig. 1b

Fig. 1c

Fig. 1d

Fig. 1e

Fig. 1f

Fig. 1g

Fig. 1h

Scheelite:carbon black mixture = 85:15 in the absence of Co – milling 24 h

Fig. 2a

Fig. 2b

Scheelite:carbon black mixture = 85:15 with different content of Co - 1400 °C, 1h

Fig. 3a

Fig. 3b

Fig. 3c

Fig. 3d

Fig. 3e

Fig. 3f

Fig. 3g

Fig. 3h

Scheelite:carbon black mixture = 85:15 with or without Co after purification

Fig. 4a

Fig. 4b

Fig. 4c

FIG. 5

FIG. 6

Scheelite:carbon black mixture = 85,67:14,33 with or without Co

1 h @ 1100 °C

1 h @ 1400 °C

0 % Co

**FIG. 7a**

**FIG. 7b**

2 % Co

**FIG. 7c**

**FIG. 7d**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4008090 A
- US 3379503 A
- US 4834963 A
- US 3743499 A, L.H. Ramqvist

### Non-patent literature cited in the description

- **S. NORGEN et al.** *Int. J. Refract. Met. Hard Mater.,* 2015, vol. 48, 31-45
- **BS TERRY ; DC AZUBIKE.** *Trans. IMM,* 1990, vol. 99, C175-180
- **TERRY BS ; DC AZUBIKE ; A. CHRYSANTHOU.** *J. Mater. Sci.,* 1994, vol. 29, 4300-4305
- **R. F. JOHNSTON ; H.T. NGUYEN.** *Materials Engineering,* 1996, vol. 9 (7), 765-773
- **NJ WELHAM.** *Mater. Sci. eng.,* 1998, vol. 248, 230-237
- **NJ WELHAM.** *Am. Inst. Chem. eng. J.,* 2000, vol. 46, 68-71
- **J. TEMUUJIN ; M. SENNA ; T. JADAMBAA ; D. BYAMBASUREN.** *J. Am. Ceram. Soc.,* 2005, vol. 88 (4), 983-985
- **K.J.D. MACKENZIE ; J. TEMUUJIN ; C. MCCAMMON ; M. SENNA.** *J. Europ. Ceram. Soc.,* 2006, vol. 26, 2581-2585
- **H. SINGH ; OP PANDEY.** *Ceramics International,* 2013, vol. 39, 785-790
- **H. SINGH ; OP PANDEY.** *Ceramics International,* 2013, vol. 39, 6703-6706
- **POLINI R. et al.** *Int. J. Refract. Met. Hard Mater.,* 2015, vol. 51, 289-300
- **S. TAKATSU.** *Powder Metallurgy International,* 1978, vol. 10 (1), 13-15
- **CF DAVIDSON ; GB ALEXANDER ; ME WADSWORTH.** Catalytic effect of cobalt on the carburization kinetics of tungsten. *Metallurgical Transactions A,* August 1979, vol. 10 (8), 1059-1069
- **R. POLINI ; E. PALMIERI ; G. MARCHESELLI.** Nanostructured tungsten carbide synthesis by carbothermic reduction of scheelite: A comprehensive study. *Int. J. Refract. Met. Hard Mater.,* 2015, vol. 51, 289-300